# EUROPEAN PATENT APPLICATION

(11) **EP 3 754 268 A1**
(43) Date of publication of application: **23.12.2020**
(21) Application number: 19180696.7
(22) Date of filing: 17.06.2019
(51) Int. Cl.: F25B 25/00, F25B 49/02, F24F 13/06

(54) **WATER CHILLER**

(71) Applicant: Carrier Corporation, Palm Beach Gardens, FL 33418 (US)
(72) Inventor: GRABON, Michel, 01122 MONTLUEL (FR)
(74) Representative: Lavoix

(57) **Abstract**

This water chiller (2) comprises at least one refrigeration apparatus (8), a water circuit (10) in which circulates a water flow (100) to be cooled down, and at least one fan (12) generating an air flow (F1) that is aspired from the outside. The refrigeration apparatus (8) comprises a refrigerant circuit (80) functioning in closed loop and comprising a compressor (82), at least one condenser (84), an expansion valve (86) and an evaporator (88). The condenser (84) is configured to release heat from the refrigerant to the air flow (F1) under action of said at least one fan (12), the evaporator (88) is configured to draw heat from the water flow (100) to cool down said water flow (100). The water chiller (2) further comprises at least one free cooling heat exchanger (14), configured to be exposed to the air flow (F1), and connectible to the water circuit (10). The water chiller (2) comprises controllable air flow direction means (16) adapted to selectively direct the air flow (F1) towards the away from said at least one free cooling heat exchanger (14), in a mechanical cooling configuration in which the refrigeration apparatus (8) is running and said at least one free cooling heat exchanger (14) is disconnected from the water circuit (10), or direct the air flow (F1) through said at least one free cooling heat exchanger (14), in a free cooling configuration in which the refrigeration apparatus (8) is stopped and said at least one free cooling heat exchanger (14) is connected to the water circuit (10).

## Description

The present invention concerns a water chiller.

Water chillers are used in buildings to cool water fed to air handling units installed in various rooms in which fresh air is blown. In large rooms, for example conference rooms or data centers, fresh air is always needed, thus cooling water may be necessary even if the outside temperature is lower than the temperature of the water.

In some places where the outside temperature is usually low, free cooling, which consists in directly refreshing water by heat exchange with the outside air, is used as it has a good efficiency and has a low energy cost. Free cooling is therefore largely used in conference rooms or data centers.

The water chillers may also comprise a refrigeration apparatus including a refrigerant thermodynamic circuit, to operate mechanical cooling. In places where free cooling is possible in some periods, while mechanical cooling remains necessary in summer periods due to high temperatures, water chillers able to operate in both modes may be desired. However, in most cases, the buildings simply have two different water chillers for each mode, generating a high cost and high volume and large footprint.

Some water chillers have a water circuit in parallel to the refrigerant circuit, and have the condensers of the refrigeration apparatus in series with free cooling heat exchangers, with respect to the air flow, to be able to selectively operate both modes within a same system. However, placing the condensers of the refrigeration apparatus in series with the free cooling heat exchangers means that the air flow has to circulate successively through two exchangers. This doubles the pressure drop generated during the passage of air through these heat exchangers, inducing a high power consumption on the fans of such water chillers. Such water chillers have therefore a lower efficiency compared to chiller without free cooling coils installed in series with condensers.

An aim of the invention is to provide a new water chiller, which better adapts to the various temperature conditions of the place where it is installed, to perform water cooling at a lower cost.

To this end, the invention concerns a water chiller comprising:
- at least one refrigeration apparatus,
- a water circuit in which circulates a water flow to be cooled down,
- at least one fan generating an air flow that is aspired from the outside;
the refrigeration apparatus comprising a refrigerant circuit functioning in closed loop, the refrigerant circuit comprising a compressor, at least one condenser, an expansion valve and an evaporator, said condenser being configured to release heat from the refrigerant to the air flow under action of said at least one fan, said evaporator being configured to draw heat from the water flow to cool down said water flow, whereas the water chiller further comprises at least one free cooling heat exchanger, configured to be exposed to the air flow, and connectible to the water circuit, and whereas the water chiller comprises controllable air flow direction means adapted to selectively:
- direct the air flow away from said at least one free cooling heat exchanger, in a mechanical cooling configuration in which the refrigeration apparatus is running and said at least one free cooling heat exchanger is disconnected from the water circuit; or
- direct the air flow through said at least one free cooling heat exchanger, in a free cooling configuration in which the refrigeration apparatus is stopped and said at least one free cooling heat exchanger is connected to the water circuit.

Thanks to the invention, with the same apparatus, free cooling and mechanical cooling can be performed depending on the outside air temperature conditions, allowing better performance, while the energy cost remains low and without having to use two different apparatuses.

According to further aspects of the invention that are advantageous but not compulsory, such a water chiller may incorporate one or several of the following features:
- The water chiller comprises a temperature sensor configured to measure an ambient air temperature outside the water chiller, and a control unit configured to respectively run the water chiller in mechanical cooling configuration or in free cooling configuration depending on the ambient air temperature being respectively superior or inferior to a temperature threshold.
- The control unit is configured to control the controllable closure means, the refrigeration system, and valves connecting the at least one free cooling heat exchanger to the water circuit.
- The controllable air flow direction means are formed by louvers, that are movable between a closed position, in which they form a panel preventing the air flow from passing through them and directing the air flow towards the at least one free cooling heat exchanger, and an open position, in which the air flow passes through the louvers away from said at least one free cooling heat exchanger.
- The at least one condenser is provided on a vertical lateral side of the water chiller, and the at least one free cooling heat exchanger is provided on the same vertical side of the water chiller above said at least one condenser.
- The at least one free cooling heat exchanger extends in vertical alignment with the at least one condenser.
- The at least one free cooling heat exchanger has a V shape protruding from a vertical alignment of the at least one condenser.
- The at least one free cooling heat exchanger and the controllable closing means are provided on a top side of the water chiller above the at least one fan.
- The at least one free cooling heat exchanger and the controllable closing means are provided as an additional module to be mounted on top of an existing water chiller.
- The water chiller comprises two symmetric subassemblies, each subassembly comprising at least one condenser, at least one free cooling heat exchanger, at least one fan and a set of controllable air flow direction means, said two symmetric subassemblies being provided on both sides of a central plane and symmetric with respect to said central plane.

Exemplary embodiments according to the invention and including further advantageous features of the invention are explained below, referring to the attached drawings, in which:
- figure 1 is a synoptic drawing showing a water chiller according to a first embodiment of the invention, running in a mechanical cooling configuration;
- figure 2 is a synoptic drawing of the water chiller of figure 1, running in a free cooling configuration;
- figure 3 is a synoptic drawing showing a water chiller according to a second embodiment of the invention, running in a mechanical cooling configuration;
- figure 4 is a synoptic drawing of the water chiller of figure 3, running in a free cooling configuration.

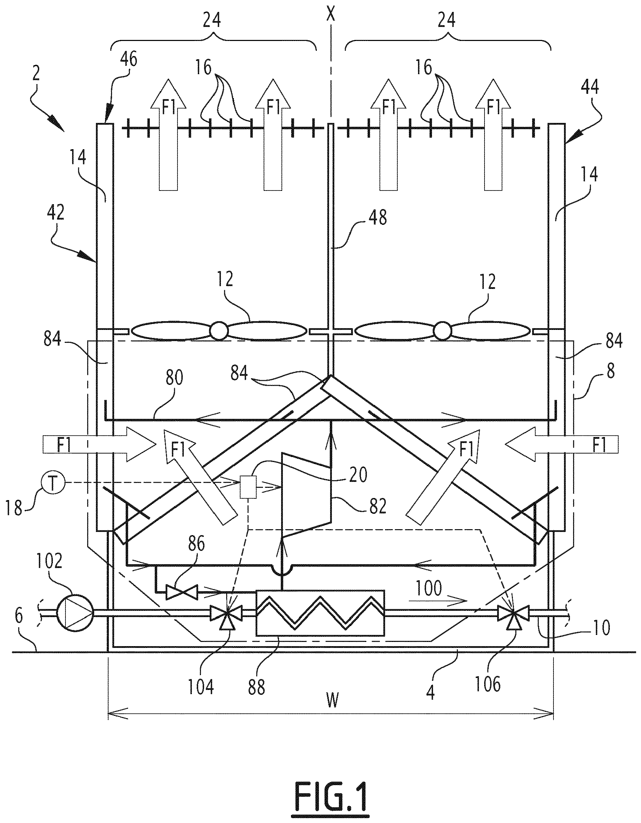

Figure 1 represents a water chiller 2. The water chiller 2 is installed on a horizontal floor 6. A floor width W of the water chiller 2 denotes the horizontal space, or footprint, occupied by the water chiller 2 on the floor 6. The water chiller 2 may comprise a frame 4 that lies on the floor 6. Axis X denotes a vertical direction.

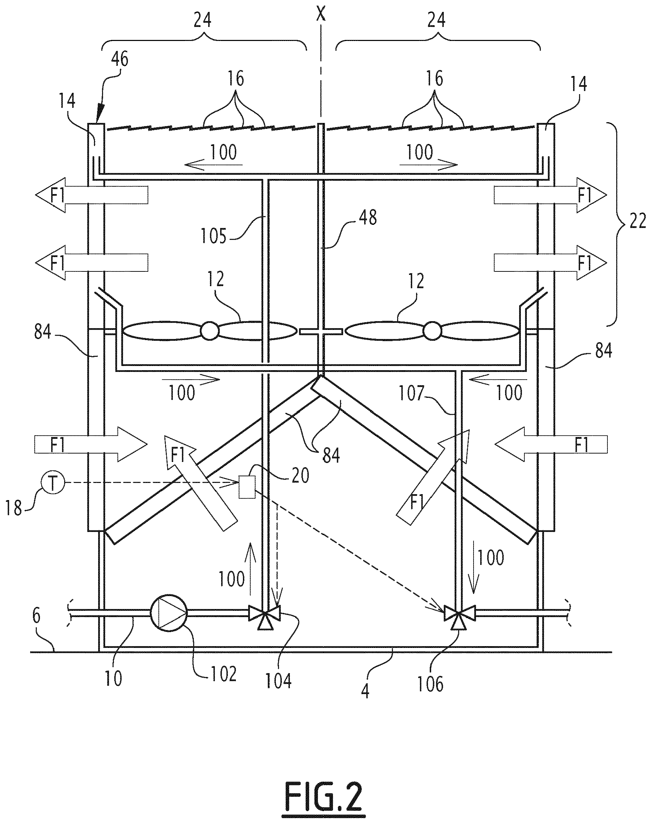

The aim of the water chiller 2 is to cool down water for feeding a non-shown air handling unit which blows cold air into a room of a building, for example a workspace, a conference room, a datacenter, amongst others. The water chiller 2 therefore comprises a refrigeration apparatus 8, and a water circuit 10 in which circulates a water flow 100 to be cooled down for feeding said non-shown air handling unit. Circulation of water in the water circuit 10 is run by a pump 102. The pump 102 may be located outside the water chiller 2, as shown on figure 1, or inside the water chiller 2, as shown on figure 2.

According to a variant, the water chiller 2 may comprise more than one refrigeration apparatus 8.

The water chiller 2 also comprise at least one fan 12 which forces the circulation of an ambient air flow F1 from outside the water chiller 2 inside the water chiller 2, through the frame 4. In one embodiment, the water chiller 2 may comprise two fans 12. The air flow F1 generated by the fans 12 has a generally vertical direction along axis X. The role of the fans 12 is disclosed below with more precision.

The refrigeration apparatus 8 comprises a refrigerant circuit 80 functioning in closed loop, and comprising a compressor 82, at least one condenser 84, an expansion valve 86 and an evaporator 88. The direction of circulation of the refrigerant in the refrigerant circuit 80 is indicated by arrows. The refrigerant circulates successively in these four components according to a thermodynamic cycle, which is briefly described here below, in a steady state, during a high load operation of the refrigeration apparatus 8.

In the compressor 82, the refrigerant is in a gaseous state, and is compressed from a low pressure to a high pressure, which raises the temperature of the refrigerant from a low temperature to a high temperature.

In the condenser 84, the refrigerant is in a bi-phasic state, including gaseous and liquid refrigerant, and is condensed to a liquid state by the condenser 84, by thermal exchange with the air flow F1, which is forced by the fans 12 across the condenser 84. The refrigerant being at a high temperature, superior to an temperature T of the ambient air surrounding the water chiller 2, the refrigerant releases heat to the air flow F1 under action of the fans 12.

In the expansion valve 86, the refrigerant is brought to the low pressure, which lowers the temperature of the refrigerant to the low temperature while evaporating the refrigerant to the bi-phasic state.

In the evaporator 88, the refrigerant is in a bi-phasic state, including gaseous and liquid refrigerant, and is evaporated to a gaseous state by thermal exchange with the water flow 100, which circulates within the evaporator 88. The refrigerant entering the evaporator 88 being at a low temperature, draws heat from the water flow 100 to be cooled down, which is at a higher temperature than the refrigerant. The water flow 100 exits the evaporator 88 at a temperature lower than before entering the evaporator 88.

In an embodiment, the water chiller 2 comprises several condensers 84. At least one of the condensers 84 may be vertical and mounted along a lateral side of the water chiller 2, for example vertical sides 42 and 44 of the water chiller 2.

The water chiller 2 may also comprise, in addition or in alternative to the vertical condensers 84, other condensers 84 mounted closer to an inner side of the water chiller 2. These inner condensers 84 may have an inclined shape.

The water chiller 2 further comprises at least one free cooling heat exchanger 14, which is an air-water exchanger, also called hydronic coil, or dry cooler. The heat exchanger 14 is connected to the water circuit 10, and configured to be exposed to the air flow F1, so as to perform free cooling. Free cooling consists in cooling down the water flow 100 by direct heat exchange between the water and the air flow F1, without having to rely on the refrigerant apparatus 8, in which the refrigerant must be first cooled down by the outside air before the water can be cooled.

The free cooling heat exchanger 14 comprises non-shown apertures through which the air flow F1 passes to the outside of the water chiller 2. The free cooling heat exchanger 14 extends along a vertical direction. For example, the water chiller 2 may comprise two free cooling heat exchangers 14 provided on two opposed sides of the water chiller 2.

The water chiller 2 further comprises controllable air flow direction means, adapted to selectively:
- direct the air flow F1 towards the outside of the water chiller 2, and away from the free cooling heat exchangers 14, in a mechanical cooling configuration in which the refrigeration apparatus 8 is running and the free cooling heat exchangers 14 are disconnected from the water circuit 10; or
- direct the air flow F1 towards the free cooling heat exchangers 14, in a free cooling configuration in which the refrigeration apparatus 8 is stopped and the free cooling heat exchangers 14 are connected to the water circuit 10.

The controllable air flow direction means may be formed by louvers 16, that are movable between a closed position, shown on figure 2, in which they form a panel that prevents the air flow F1 from passing vertically along axis X through the louvers 16 and directs the air flow F1, laterally from the axis X towards the free cooling heat exchanger 14, and an open position, shown on figure 1, in which the air flow F1 passes vertically along the axis X through the louvers 16 towards the outside of the water chiller 2.

The water chiller 2 may comprise a temperature sensor 18 configured to measure the air ambient temperature T, and a control unit 20 configured to run the water chiller 2 in respectively mechanical cooling configuration or in free cooling configuration depending on the ambient air temperature T being respectively superior or inferior to a temperature threshold Tmax.

The operation of the water chiller 2 is now described. In some places, the annual weather conditions may induce that a significant number of days see an average outside temperature T inferior to the temperature threshold Tmax, which can be 18°C. Under this temperature Tmax, free cooling is considered efficient and permits cooling down water with a quite high coefficient of performance (COP). Under such temperature conditions, operating the water chiller 2 in mechanical cooling would consume more energy, with a lower COP. It is therefore advantageous to run the water chiller 2 in free cooling configuration, by closing the louvers 16. The closed louvers 16 form a panel facing the fans 12 right in vertical direction. The air flow F1 is aspired by the fans 12 through the condensers 84 and the frame 4, then blown along axis X by the fans 12. The air flow F1 is blocked by the closed louvers 16 and therefore prevented from going vertically and forced through the free cooling heat exchangers 14 towards the lateral sides of the water chiller 2. The water circuit 10 is connected to the free cooling heat exchangers 14, so that heat exchange is performed between the air flow F1 and the water flow 100. During this free cooling configuration, the refrigeration apparatus 8 is stopped, for example by stopping the operation of the compressor 82, to save energy. In free cooling configuration, the air flow F1 successively passes through the condensers 84 (upstream the fans 12) then through the free cooling heat exchangers 14 (downstream the fans 12). The pressure drop and subsequent power consumption generated by the air flow path are largely compensated by the high efficiency of free cooling and the stoppage of the compressor 82.

In case the ambient air temperature T is superior to the temperature threshold Tmax, the temperature difference between the temperature of the water flow 100 and the ambient air temperature T may not be large enough to obtain an efficient free cooling. The water chiller 2 must therefore operate in mechanical cooling configuration. The refrigeration apparatus 8 is started, for example by starting the compressor 82. The louvers 16 are opened, forming a large aperture right above the fans 12. The air flow F1 is aspired through the frame 4 and the condensers 84 and then blow along axis X by the fans 12. The air flow F1 is able to flow through the free cooling heat exchangers 14 and through the opened louvers 16. However, because the free cooling heat exchangers 14 generate a pressure drop, the air flow F1 is therefore spontaneously driven vertically through the opened louvers 16, which generate a much lower pressure drop. The air flow F1 therefore passes only through the condensers 84, avoiding any unfavorable pressure drop that would occur in the prior-art air chillers where the condensers and free cooling exchangers are coupled. The air chiller 2 therefore benefits from the full efficiency of mechanical cooling. The free cooling heat exchangers 14 are disconnected from the water circuit 10, to further save energy that would be consumed by the pump 102 to circulate water towards, through and from the free cooling heat exchangers 14.

The control unit 20 is configured to control the louvers 16. The louvers 16 may be driven between their closed and open position by a non-shown electrical motor controlled by the control unit 20.

The control unit 20 controls the refrigeration system 8, for example by sending start or stop control signals to the compressor 82.

The water circuit 10 may comprise valves, for example three way valves, controlled by the control unit 20, for connecting or disconnecting the free cooling heat exchangers 14 to the water circuit 10. The water circuit 10 may comprise a valve 104 that directs the water flow 100 towards the evaporator 88 in the mechanical cooling configuration on figure 1, or in the free cooling configuration on figure 2, directs the water flow 100 towards the free cooling heat exchangers 14, via a feeding line 105. The water circuit 10 comprises a second valve 106, linked to the free cooling heat exchangers 14 by a return line 107. The valve 106 directs the water flow 100 towards the exterior of the water chiller 2 on figure 1 and prevents the water flow 100 from going towards the return line 107. On figure 2, the valve 106 prevents the water flow 100 from going towards the evaporator 88. The feeding line 105 and the return line 107 are not represented on figure 1 for the sake of simplification of the drawing. Except the condensers 84, the elements of the refrigeration apparatus 8 are not represented on figure 2 for the sake of simplification of the drawing.

The louvers 16 are preferably provided on a top side 46 of the water chiller 2 and above the fans 12.

The free cooling heat exchangers 14 may be provided on the same vertical side of the water chiller 2 as the vertical condensers 84 and above them. In an advantageous embodiment shown on figures 1 and 2, the free cooling heat exchangers 14 may extend in vertical alignment with the vertical condensers 84. This allows keeping the width W of the water chiller 2 unchanged. The footprint of the water chiller 2 is therefore not increased by the fact that additional components for free cooling are added. Only the height of the water chiller 2 is increased.

The free cooling heat exchangers 14 and the louvers 16 may be provided as an additional module 22 to be mounted on top of an existing water chiller. The free cooling heat exchangers 14 and the louvers 16 being on top of the fans 12, which generally form the upper side of the standard water chillers, they can be mounted in a pre-assembled module 22, that can be easily installed on an existing water chiller. To complete the installation of the pre-assembled module 22, an operator must then provide the necessary water connection lines 105 and 107 and the connection of the pre-assembled module 22 with the control unit 20, which may be provided as a complementary component of the pre-assembled module 22.

In this exemplary embodiment, the water chiller 2 comprises two symmetric subassemblies 24. Each subassembly 24 comprises a vertical condenser 84, an inclined condenser 84, one free cooling heat exchanger 14, one fan 12, and one set of louvers 16. The subassemblies 24 are provided on both sides of a central plane, extending along the axis X, of the water chiller 2 and symmetric with respect to said central plane. The central plane is contained in a central division wall 48 of the water chiller 2. More generally, each subassembly 24 may comprise at least one condenser 84, at least one free cooling heat exchanger 14, at least one fan 12 and one set of controllable air flow direction means.

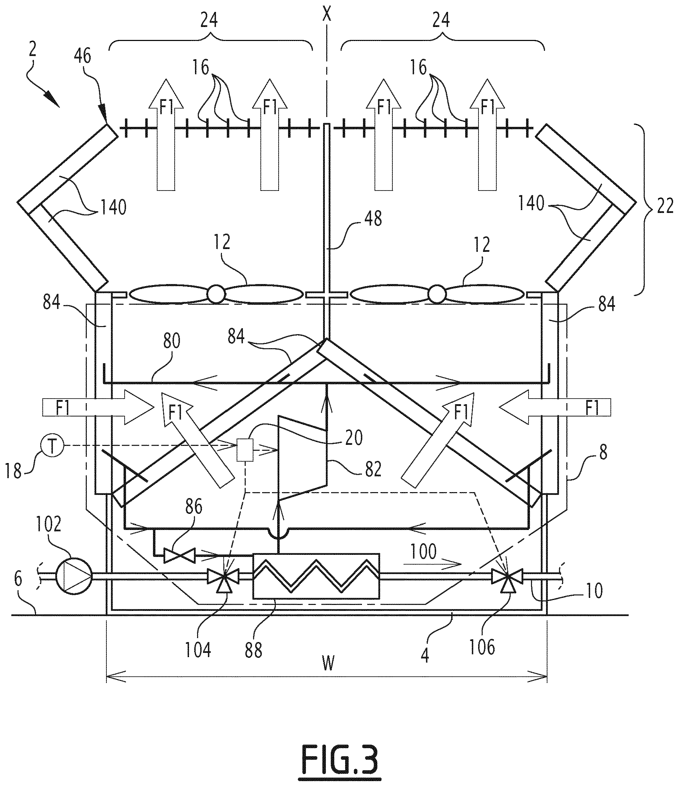

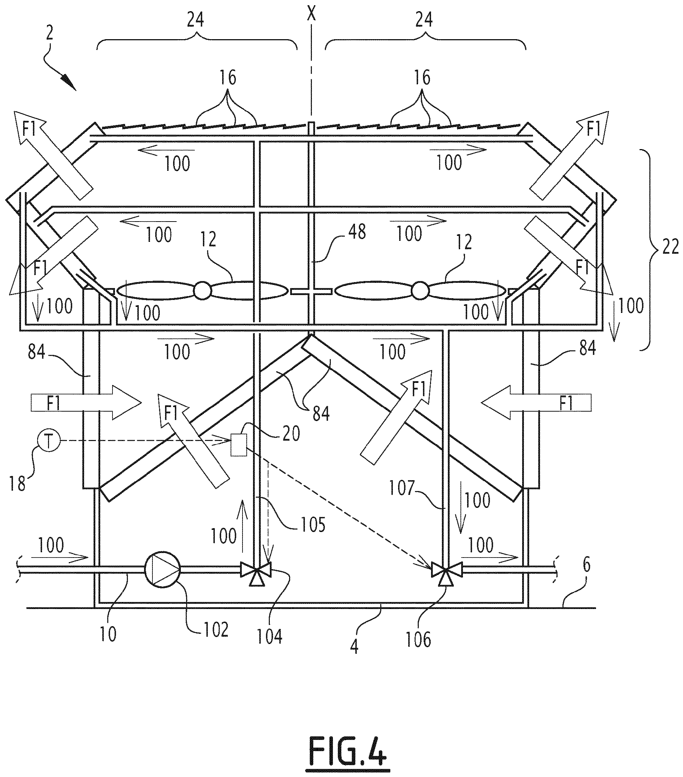

A second embodiment of the invention is represented on figures 3 and 4. In this embodiment, elements similar to the first embodiment have the same references and work in the same way. Only the differences with respect to the first embodiment are detailed here after.

In the embodiment of figures 3 and 4, the free cooling heat exchangers 14 have a V shape protruding from the vertical alignment of the vertical condensers 84, instead of being in the vertical alignment of the vertical condensers 84. In such a case, the width of the additional pre-assembled module 22 is increased, however the floor width W is not increased, and this V-shape allows reducing the overall height of the water chiller 2.

The V-shaped heat exchangers 14 may be provided as two heat exchangers 140 angled with respect to each other.

The technical features of embodiments and variants disclosed here above may be combined to form new embodiments of the invention.

## Claims

1. A water chiller (2) comprising:
- at least one refrigeration apparatus (8),
- a water circuit (10) in which circulates a water flow (100) to be cooled down,
- at least one fan (12) generating an air flow (F1) that is aspired from the outside; the refrigeration apparatus (8) comprising a refrigerant circuit (80) functioning in closed loop,
the refrigerant circuit (80) comprising a compressor (82), at least one condenser (84), an expansion valve (86) and an evaporator (88),
said condenser (84) being configured to release heat from the refrigerant to the air flow (F1) under action of said at least one fan (12),
said evaporator (88) being configured to draw heat from the water flow (100) to cool down said water flow (100),
wherein the water chiller (2) further comprises at least one free cooling heat exchanger (14), configured to be exposed to the air flow (F1), and connectible to the water circuit (10),
and wherein the water chiller (2) comprises controllable air flow direction means (16) adapted to selectively:
- direct the air flow (F1) away from said at least one free cooling heat exchanger (14), in a mechanical cooling configuration in which the refrigeration apparatus (8) is running and said at least one free cooling heat exchanger (14) is disconnected from the water circuit (10); or
- direct the air flow (F1) through said at least one free cooling heat exchanger (14), in a free cooling configuration in which the refrigeration apparatus (8) is stopped and said at least one free cooling heat exchanger (14) is connected to the water circuit (10).

2. A water chiller according to claim 1, wherein it comprises a temperature sensor (18) configured to measure an ambient air temperature (T) outside the water chiller (2), and a control unit (20) configured to respectively run the water chiller (2) in mechanical cooling configuration or in free cooling configuration depending on the ambient air temperature (T) being respectively superior or inferior to a temperature threshold (Tmax).

3. A water chiller according to claim 2, wherein the control unit (20) is configured to control the controllable closure means (16), the refrigeration system (8), and valves (104, 106) connecting the at least one free cooling heat exchanger (14) to the water circuit (10).

4. A water chiller according to any preceding claim, wherein the controllable air flow direction means are formed by louvers (16), that are movable between a closed position, in which they form a panel preventing the air flow (F1) from passing through them and directing the air flow (F1) towards the at least one free cooling heat exchanger (14), and an open position, in which the air flow (F1) passes through the louvers (16) away from said at least one free cooling heat exchanger (14).

5. A water chiller according to any preceding claim, wherein the at least one condenser (84) is provided on a vertical lateral side (42, 44) of the water chiller (2), and wherein the at least one free cooling heat exchanger (14) is provided on the same vertical side (42, 44) of the water chiller (2) above said at least one condenser (84).

6. Water chiller according to claim 5, wherein the at least one free cooling heat exchanger (14) extends in vertical alignment with the at least one condenser (84).

7. Water chiller according to claim 5, wherein the at least one free cooling heat exchanger (14) has a V shape protruding from a vertical alignment of the at least one condenser (84).

8. Water chiller according to any preceding claim, wherein the at least one free cooling heat exchanger (14) and the controllable closing means (16) are provided on a top side (46) of the water chiller (2) above the at least one fan (12).

9. Water chiller according to claim 8, wherein the at least one free cooling heat exchanger (14) and the controllable closing means (16) are provided as an additional module (22) to be mounted on top of an existing water chiller.

10. Water chiller according to any preceding claim, wherein it comprises two symmetric subassemblies (24), each subassembly comprising at least one condenser (84), at least one free cooling heat exchanger (14), at least one fan (12) and a set of controllable air flow direction means (16), said two symmetric subassemblies (24) being provided on both sides of a central plane (48) and symmetric with respect to said central plane (48).
